# EUROPEAN PATENT APPLICATION

(11) **EP 1 959 373 A2**
(43) Date of publication of application: **20.08.2008**
(21) Application number: 08150518.2
(22) Date of filing: 22.01.2008
(51) Int. Cl.: G06F 21/24

(54) **Print management device and print management method**

(30) Priority: 15.02.2007 JP 2007034665
(71) Applicant: Murata Machinery, Ltd., 3 Minami Ochiai-cho, Kisshoin Minami-ku, Kyoto-shi, Kyoto (JP)
(72) Inventor: Hattori, Ryuji, Gifu-shi Gifu 500-8842 (JP)
(74) Representative: Ackroyd, Robert

(57) **Abstract**

A print management device for receiving printing data, judging whether or not digital signature is attached to the printing data, judging if a public key of the digital signature is stored when the digital signature is attached, permitting printing when the public key of the digital signature is stored and information permitting printing is stored, and printing the printing data is provided.

## Description

### [CROSS-REFERENCE TO RELATED APPLICATIONS]

This application claims priority from Japanese Patent Application No.2007-034665, filed on February 15, 2007, which application is hereby incorporated by reference in its entirety.

### BACKGROUND OF THE INVENTION

### 1. Field of the Invention

The present invention relates to a device and a method for managing printing.

### 2. Description of the Related Art

Digital signatures for detecting falsification of electric document and certifying the creator have recently been used as a technique taking the place of handwritten signatures and seals conventionally used.

### BRIEF SUMMARY OF THE INVENTION

A data management device for managing data while preserving confidentiality of the data transmitted from a transmitter is known. The data management device includes a memory unit for storing information related to at least the transmitter, the recipient, and the data output destination; an authentication unit for authenticating the transmitter or the recipient based on a public key cryptosystem; a data reception management unit for receiving and managing data from the transmitter; a recipient register unit for registering the recipient as a group using attribute of electronic certificate; a data transmission unit for transmitting data to the data output destination upon request from the recipient; and a management unit for accepting and managing the electronic signature of the transmitter as transmit confirmation and the electronic signature of the recipient as receive confirmation. The data management device transmits data to the data output destination while preserving confidentiality of the data, and the data is output only by the registered recipient at the data output destination.

Conventionally, however, whether or not to execute printing could not be controlled with a simple procedure in the print management device such as printer.

In view of the above problems, the present invention provides a technique that enables only the person authorized in the print management device to execute printing with a simple procedure.

In order to overcome the problems described above, a first aspect of the present invention relates to a print management device including a memory unit for storing in plurals a public key of a signer of a digital signature and a setting of whether or not to execute printing based on a print instruction from the signer in correspondence to each other; a transceiver unit for receiving printing data; a printing data verifying unit for judging whether the digital signature is attached to the printing data, whether the public key of the digital signature is stored in the memory unit when the digital signature is attached, and whether printing based on the print instruction from the signer is permitted when the public key of the digital signature is stored in the memory unit; a print control unit for permitting printing of the printing data when judged by the printing data verifying unit that the digital signature is attached to the printing data, the public key of the digital signature is stored in the memory unit, and the printing based on the print instruction from the signer is permitted, and not permitting printing in other cases; and a printer unit for printing the printing data given permission to be printed by the print control unit.

Here, "in other cases" may include a case where the digital signature is not attached to the printing data, a case where the public key of the digital signature is not stored in the memory unit, a case where printing based on print instruction from the signer is not permitted, and the like. "Public key of the digital signature is stored in the memory unit" is a case where the digital signature attached to the printing data is decrypted with one of the public keys stored in the memory unit, and the content of the digital signature is legitimate.

According to the configuration, only the authorized person can execute printing by registering the public key of the digital signature of the person to be authorized printing in the memory unit and setting so that printing is permitted in correspondence to the public key in advance. When the person set in such manner executes printing in the print management device, the printing data can be automatically printed without the intervention of the user at the print management device by simply attaching the digital signature to the printing data at the terminal such as personal computer (PC) which transmits printing data to the print management device.

In a second, preferred aspect of the present invention, a notifying unit for notifying a transmission source of the printing data that printing is not permitted when the print control unit does not permit printing of the printing data is further arranged.

In a third, preferred aspect of the present invention, a display unit for displaying that printing is not permitted when the print control unit does not permit printing of the printing data is further arranged.

According to the present invention, only the authorized person is able to print the printing data with a simple procedure.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is a functional block diagram illustrating a configuration of a print management device according to an embodiment of the present invention;

FIG. 2 is a view illustrating one example of a configuration of a memory unit of FIG. 1; and

FIG. 3 is a flowchart illustrating one example of an operation of the print management device of FIG. 1.

### DETAILED DESCRIPTION OF THE INVENTION

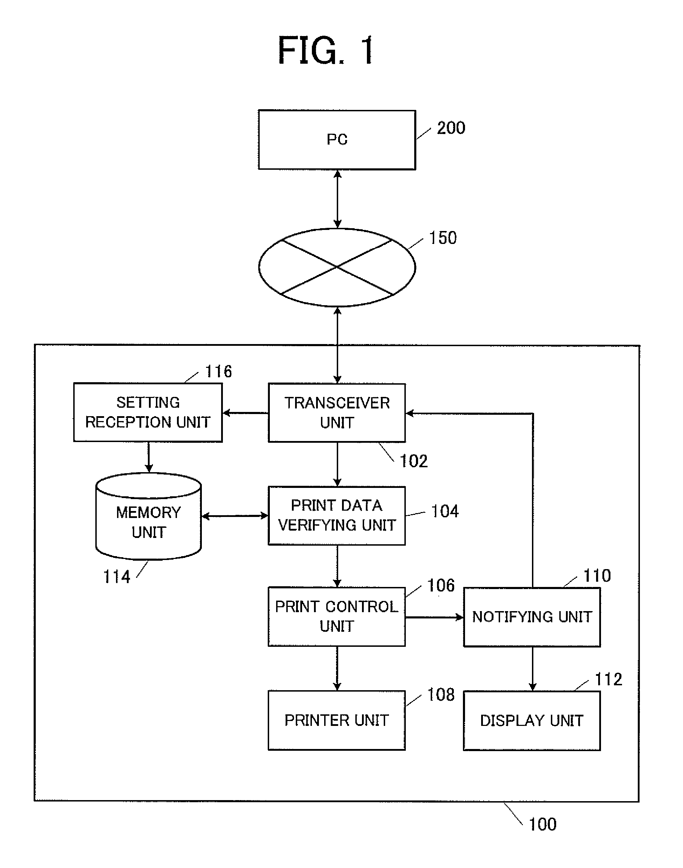

An embodiment of the present invention will now be described with reference to the drawings. Similar reference numerals are denoted for similar elements throughout the drawings, and the description will be appropriately omitted. FIG. 1 is a functional block diagram illustrating a configuration of a print management device according to the present embodiment. A print management device 100 is a printer device, a multi function peripheral (MFP) having a facsimile function, or the like. In FIG. 1, configuration of the portion not related to the essence of the present invention will be omitted. The print management device 100 is connected to a terminal such as a PC 200 by way of a network 150 such as the Internet or a Local Area Network (LAN).

The print management device 100 includes a transceiver unit 102, a printing data verifying unit 104, a print control unit 106, a printer unit 108, a notifying unit 110, a display unit 112, a memory unit 114, and a setting reception unit 116.

Each element of the print management device 100 is represented by an arbitrary combination of hardware and software centering on a central processing unit (CPU) of an arbitrary computer, a memory, a program for realizing components of FIG. 1 loaded in the memory, a storage unit such as a hard disc for storing the program, and network interface. There are various variants in methods and devices for realizing each element and that should be recognized by those skilled in the art. FIG. 1 illustrates blocks in functional units and not configuration in hardware units.

The transceiver unit 102 receives printing data from the PC 200. The memory unit 114 stores in plurals a public key of a signer of a digital signature and a setting of print permission based on a print instruction from the signer in correspondence to each other. The setting reception unit 116 stores the public key of the digital signature and the setting of print permission in the memory unit 114 in advance.

The setting reception unit 116 receives a setting of the user via an operation unit etc. (not illustrated). The manager of the print management device 100 can set whether or not to permit printing. The setting reception unit 116, for example, authenticates the user, and receives instruction from the authenticated user. The setting reception unit 116 also receives a public key transmitted from another terminal via the transceiver unit 102, and stores the relevant public key in the memory unit 114.

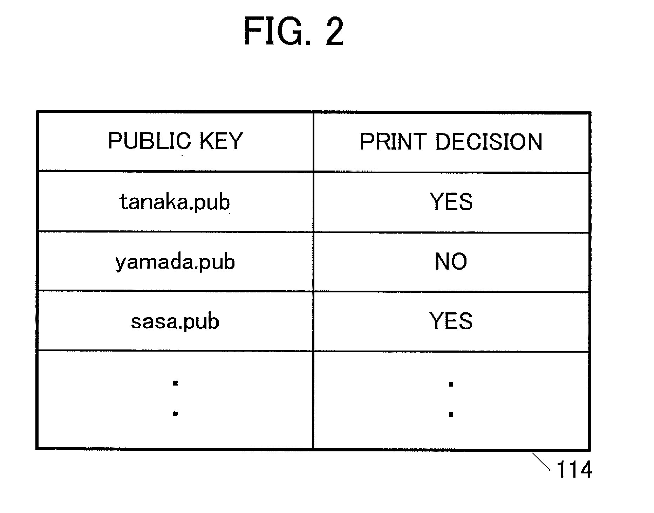

FIG. 2 is a view illustrating one example of a configuration of the memory unit 114. The memory unit 114 includes a public key field and a print decision field. The public key of the signer of the digital signature is stored in the public key field. The setting of print permission is stored in the print decision field. For instance, the public key "tanaka.pub" is given permission to print the printing data. The public key "yamada.pub" is not given permission to print the printing data.

The printing data verifying unit 104 verifies the printing data received by the transceiver unit 102. Specifically, the printing data verifying unit 104 judges whether or not a digital signature is attached to the printing data received by the transceiver unit 102. If the digital signature is attached, the printing data verifying unit 104 judges whether or not the public key of the relevant digital signature is stored in the memory unit 114. If the public key of the digital signature is stored in the memory unit 114, the printing data verifying unit 104 judges whether or not printing based on the print instruction from the signer is permitted.

The print control unit 106 permits printing of the printing data when judged by the printing data verifying unit 104 that the digital signature is attached to the printing data, the public key of the digital signature is stored in the memory unit 114, and printing based on the print instruction from the signer is permitted. The print control unit 106 does not permit printing in other cases. The printer unit 108 prints the printing data which is given permission to be printed by the print control unit 106.

If the print control unit 106 does not permit printing of the printing data, the notifying unit 110 notifies that printing has not been permitted to the PC 200, which is the transmission source of the printing data. If the print control unit 106 does not permit printing of the printing data, the notifying unit 110 may also display such fact on the display unit 112. The display unit 112 is a liquid crystal display and the like.

The notifying unit 110 may also notify the reason printing was not permitted. If, for example, the user of the PC 200 forgets to attach the digital signature to the printing data although the public key is registered in the memory unit 114, the user can again transmit the printing data attached with the digital signature to the print management device 100 to be printed. If the public key is not registered or if the setting of the print permission is not stored in the memory unit 114, processes can be requested to the manager etc. as needed.

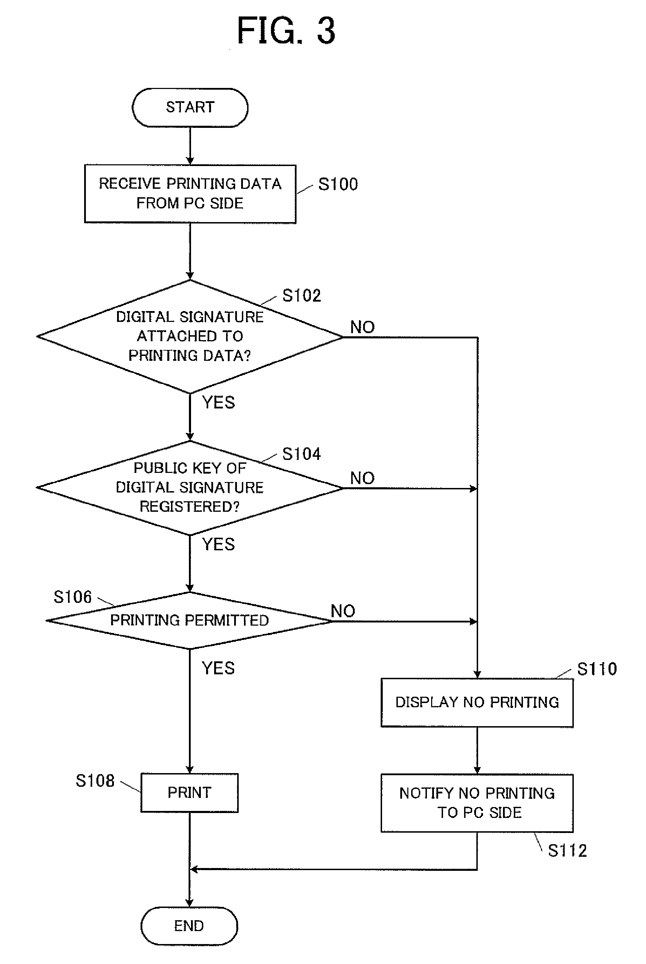

The operation of the print management device 100 configured as above will be described below. FIG. 3 is a flowchart illustrating the procedures of when the print management device 100 of the present embodiment receives the printing data from the PC 200. FIGS. 1 and 2 are also referenced in the following description.

When the transceiver unit 102 receives the printing data (S100), the printing data verifying unit 104 judges whether or not the digital signature is attached to the printing data (S102). If the digital signature is attached (YES in S102), the printing data verifying unit 104 judges whether the public key of the digital signature is registered in the memory unit 114 (S104).

The printing data verifying unit 104 verifies whether the digital signature attached to the printing data can be decrypted with one of the public keys stored in the memory unit 114, and also whether the content is legitimate. If the digital signature is decrypted and the content is legitimate, the printing data verifying unit 104 judges that the public key is registered.

If judged that the public key of the digital signature is registered in the memory unit 114 in step S104 (YES in S104), the printing data verifying unit 104 judges whether or not printing is permitted in correspondence to the public key (S106). If printing is permitted (YES in S106), the print control unit 106 causes the printer unit 108 to print the printing data (S108).

Meanwhile, if the digital signature is not attached in step S102 (No in S102), if the public key of the digital signature is not registered in the memory unit 114 in step 104 (No in S104), or if printing is not permitted in correspondence to the public key (No in S106), the print control unit 106 does not permit printing of the printing data.

In this case, the print control unit 106 notifies the notifying unit 110, and the notifying unit 110 in turn displays the fact that printing is not performed on the display unit 112 (S110). Alternatively, the print control unit 106 notifies that printing is not performed to the PC 200, which is the transmission source of the printing data through the transceiver unit 102 (S112).

As described above, according to the print management device 100 of the present embodiment, only the authorized users can execute printing in the print management device 100. In this case, the printing data verifying unit 104 judges whether the public key of the digital signature attached to the printing data is stored in the memory unit 114 and whether print permission is set in correspondence to the public key, and thus whether or not to print the printing data can be judged with the digital signature as the key. Therefore, in the PC 200, only the authorized users can execute printing in the print management device 100 with a simple operation of simply performing the process of attaching a digital signature to the printing data desired to be printed.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true scope of the present invention.

## Claims

1. A print management device comprising:
a memory unit (114) for storing a public key of a signer of a digital signature and a setting of print permission based on a print instruction from the signer in correspondence to each other;
a transceiver unit (102) for receiving printing data;
a printing data verifying unit (104) for judging whether the digital signature is attached to the printing data, whether the public key of the digital signature is stored in the memory unit (114) when the digital signature is attached, and whether printing based on the print instruction from the signer is permitted when the public key of the digital signature is stored in the memory unit (114);
a print control unit (106) for permitting printing of the printing data when judged by the printing data verifying unit (104) that the digital signature is attached to the printing data, the public key of the digital signature is stored in the memory unit (114), and the printing based on the print instruction from the signer is permitted, and not permitting the printing in other cases; and
a printer unit (108) for printing the printing data given permission to be printed by the print control unit (106).

2. A print management device according to claim 1, wherein the printing data verifying unit (104) judges that the public key is registered in the memory unit (114) if the digital signature is decrypted by one of the public keys stored in the memory unit (114) and content of the digital signature is legitimate.

3. A print management device according to claim 1 or 2, including a notifying unit (110) for notifying a transmission source of the printing data that printing is not permitted when the print control unit (106) does not permit the printing of the printing data.

4. A print management device according to claim 1, 2 or 3, including a display unit (112) for displaying the fact that printing is not permitted when the print control unit (106) does not permit the printing of the printing data.

5. A print management device according to claim 1, 2, 3 or 4, including a setting reception unit (116) for accepting information to be stored in the memory unit (114).

6. A print management method comprising the steps of:
receiving (S100) printing data;
judging (S102) whether or not a digital signature is attached to the printing data;
judging (S104) whether a public key of the digital signature is stored in a memory unit (114) when the digital signature is attached;
permitting (S106) printing when the public key of the digital signature is stored and information permitting the printing is stored in the memory unit (114); and
printing (S108) the printing data.

7. A print management method according to claim 6, including a step (S110) of displaying on a display unit (112) that printing is not permitted when the digital signature is not attached, when the public key of the digital signature is not stored in the memory unit (114), or information that printing is not permitted is stored in the memory unit (114).

8. A print management method according to claim 6 or 7, including a step (S112) of notifying a transmission source of the printing data that printing is not to be printed when the digital signature is not attached, the public key of the digital signature is not stored in the memory unit (114), or information that printing is not permitted is stored in the memory unit (114).
